# EUROPEAN PATENT APPLICATION

(11) **EP 0 791 811 A2**
(43) Date of publication of application: **27.08.1997**
(21) Application number: 97100339.7
(22) Date of filing: 10.01.1997
(51) Int. Cl.: G01F 23/296

(54) **System and method for measuring level of turbulent liquid**

(30) Priority: 20.02.1996 US 604154
(71) Applicant: ECHLIN INC., Branford, CT 06405 (US)
(72) Inventor: Meister,Jack B., Convent Station, New Jersey 07961 (US)
(74) Representative: Patentanwälte Hauck, Graalfs, Wehnert, Döring, Siemons

(57) **Abstract**

Liquid level is measured within a vessel (14) of predetermined height by directing sonic or ultrasonic energy toward the liquid surface (18) from both above and beneath the liquid surface, receiving energy returned from the liquid surface, and developing first and second signals respectively indicative of headspace above the liquid surface and liquid height within the vessel. These first and second signals are compared to the predetermined vessel height so as to identify apparently erroneous first or second signals indicative of a total liquid height and headspace either greater than or less than the predetermined height of the vessel. Level of liquid in the vessel is then determined as a function of the first and second signals not so identified as apparently erroneous. In this way, false signals caused by turbulence at the liquid surface or an inclined liquid surface are automatically discarded, yielding a more accurate reading of liquid level.

## Description

The present invention is directed to measurement of liquid level in a vessel, and more particularly to a system and method for measuring the level of turbulent liquid such as in an automotive environment.

### Background and Summary of the Invention

It has heretofore been proposed to measure the level of liquid in a vessel employing a transducer disposed either at the top or the bottom of the vessel for directing sonic or ultrasonic energy toward the liquid surface and receiving return energy therefrom. Electronics are coupled to the transducer for determining headspace above the liquid surface when the transducer is disposed at the top of the vessel, or for determining height to the liquid surface when the transducer is disposed at the bottom of the vessel. Systems of this character work well in static environments. However, in automotive applications, for example, such as for measurement of fuel or coolant quantity, road or engine vibrations induce substantial turbulence at the liquid surface, leading to erroneous readings of fuel or coolant quantity. Furthermore, the vehicle may be traveling uphill or downhill, or rounding a corner, such that the liquid surface is inclined and again leads to erroneous readings. It is a general object of the present invention to provide a system and method for measuring the level of liquid in a vessel of the described character in which return signals from the liquid surface can be readily identified as erroneous in appropriate circumstances, and thus which yield a more accurate reading of liquid level.

Liquid level is measured within a vessel of predetermined height in accordance with the present invention by directing sonic or ultrasonic energy toward the liquid surface from both above and beneath the liquid surface, receiving energy returned from the liquid surface, and developing first and second signals respectively indicative of headspace above the liquid surface and liquid height within the vessel. These first and second signals are compared to the predetermined vessel height so as to identify apparently erroneous first or second signals indicative of a total liquid height and headspace either greater than or less than the predetermined height of the vessel. Level of liquid in the vessel is then determined as a function of the first and second signals not so identified as apparently erroneous. In this way, false signals caused by turbulence at the liquid surface or an inclined liquid surface are automatically discarded, yielding a more accurate reading of liquid level.

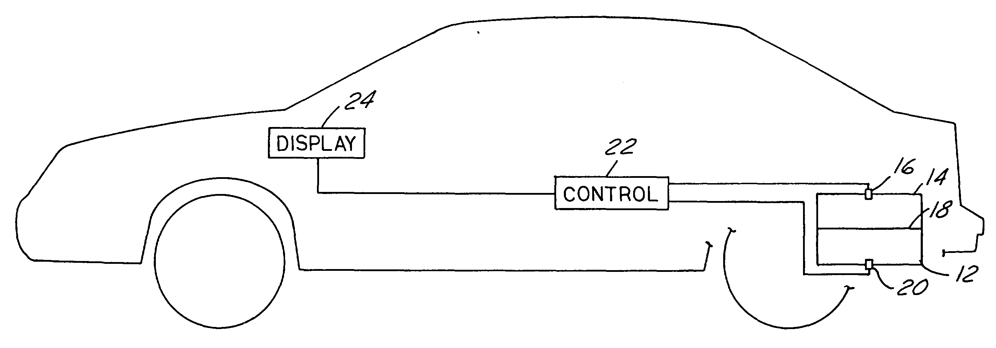

### Brief Description of the Drawing

The invention, together with additional objects, features and advantages thereof, will be best understood from the following description, the appended claims and the accompanying drawing, which is a functional block diagram of a system for measuring level of fuel in an automobile tank in accordance with one presently preferred implementation of the invention.

### Detailed Description of Preferred Embodiment

The drawing illustrates a system 10 in accordance with the present invention for measuring or determining level of fuel 12 within an automotive fuel tank 14. A first transducer 16 is positioned at the upper portion of tank 14 for directing sonic or ultrasonic energy downwardly toward the surface 18 of liquid fuel 12, and receiving return energy reflected from the liquid surface. A second transducer 20 is positioned at the lower portion of tank 14 for directing sonic or ultrasonic energy upwardly toward surface 18 through liquid fuel 12, and receiving return energy reflected downwardly from surface 18. A control electronics package 22 is connected to transducers 16, 20. Electronics 22 cooperates with transducer 16 in the usual manner for developing a first signal indicative of apparent height or headspace within tank 14 between surface 18 and transducer 16. Such signal is developed as a function of the round-trip transit time of energy traveling downwardly toward and reflected upwardly from surface 18. In a similar manner, control electronics 22 cooperates with transducer 20 for developing a second signal indicative of apparent height of surface 18 above transducer 20. Once again, such second signal is developed as a function of the round-trip transit time of energy directed upwardly from transducer 20 to surface 18 and reflected downwardly to transducer 20 from surface 18. Within control electronics 22, the apparent headspace determined from transducer 16 and the apparent liquid height determined from transducer 20 are compared with the predetermined and known overall height of vessel or tank 14. That is, the sum of the headspace at transducer 16 plus the liquid height at transducer 20 should equal the overall height of vessel 14. If this sum departs from the predetermined overall vessel height by more than a selected threshold, an erroneous reading at transducer 16 or transducer 20 is indicated. Such erroneous reading may be due to turbulence or other disturbance at surface 18. Both the first and second signals are discarded when an apparently erroneous reading is indicated. However, when the sum of the first and second signals is within a predetermined margin of the known overall vessel height, liquid level is determined as a function of such signals, and is indicated at an operator display 24.

In an automotive application as illustrated in the drawing, the system and method of the present invention find particular utility. In particular, control electronics 22 may be shared among a plurality of transducer pairs for measuring fuel level, oil level, coolant level, distance of an occupant from the point of air bag deployment, etc. The control electronics may be shared among these various functions, thus rendering the total system cost competitive with the total Cost of individual sensing methods currently employed. Readings may be taken periodically as indicated by system operation.

## Claims

1. A method of measuring level of liquid (12) in a vessel (14) of predetermined height, said method comprising the steps of:
(a) directing (at 16) sonic or ultrasonic energy toward the liquid surface (18) from above the liquid surface and receiving (at 16) return energy from the liquid surface so as to develop a first signal indicative of apparent headspace above the liquid surface,
(b) directing (at 20) sonic or ultrasonic energy toward the liquid surface (18) from beneath the liquid surface and receiving (at 20) return energy from the liquid surface so as to develop a second signal indicative of apparent liquid height,
(c) comparing (at 22) said first and second signals to said predetermined height so as to identify apparently erroneous first or second signals indicative of a total apparent liquid height and apparent headspace greater than or less than said predetermined height, and
(d) determining (at 22) level of liquid in the vessel as a function of first and second signals not identified as apparently erroneous in said step (c).

2. A system for measuring level of liquid (12) in a vessel (10) of predetermined height comprising:
first means (16) for disposition at an upper portion of the vessel for directing sonic or ultrasonic energy downwardly toward, receiving return energy from the liquid surface (18), and providing a first signal indicative of apparent headspace above the liquid surface in the vessel,
second means (20) for disposition at a lower portion of the vessel for directing sonic or ultrasonic energy upwardly toward the liquid surface (18), receiving return energy from the liquid surface, and providing a second signal indicative of apparent liquid height within the vessel,
means (22) for comparing said first and second signals to said predetermined vessel height to identify apparently erroneous first or second signals having a sum greater than or less than said predetermined height, and
means (24) for indicating level of liquid in the vessel as a function of the first and second signals not identified as apparently erroneous.
